# EUROPÄISCHE PATENTSCHRIFT

(11) **EP 1 691 131 B1**
(45) Veröffentlichungstag und Bekanntmachung des Hinweises auf die Patenterteilung: **21.05.2008**
(21) Anmeldenummer: 06000762.2
(22) Anmeldetag: 14.01.2006
(51) Int. Cl.: F21V 31/04, F21V 31/00, F21S 8/10, B60Q 1/26

(54) **Fahrzeugaussenleuchte und Verfahren zur Herstellung einer solchen Fahrzeugaussenleuchte**
Exterior lamp in a vehicle and method of manufacturing such an exterior lamp
Lampe exterieure de vehicule et procédé de fabrication d'une telle lampe exterieure

(30) Priorität: 11.02.2005 DE 202005005650 U; 01.06.2005 DE 102005025214; 11.02.2005 DE 102005006593
(43) Veröffentlichungstag der Anmeldung: 16.08.2006
(73) Patentinhaber: KOMPLED GmbH & Co. KG, 89081 Ulm (DE)
(72) Erfinder: Koch, Josef, 89081 Ulm (DE)
(74) Vertreter: Weber, Gerhard

(56) Entgegenhaltungen:
- WO-A-20/06018067
- DE-A1- 10 129 021
- DE-A1- 10 232 894
- DE-A1- 10 261 772
- DE-A1-7102004 006 15
- DE-T2- 69 632 848
- DE-U1- 20 304 930
- US-B1- 6 739 733

## Beschreibung

Die Erfindung betrifft eine Fahrzeugaußenleuchte und ein Verfahren zur Herstellung einer solchen Fahrzeugaußenleuchte

Die Leuchtenkörper von Fahrzeugaußenleuchten bestehen typischerweise aus einer Leuchtscheibe und einem Gehäuseboden, welche zusammen ein einen Hohlraum umschließendes Gehäuse bilden. Durch eine Leitungsdurchführung im Gehäuseboden ist eine wenigstens zweiadrige Leitung zur elektrischen Ansteuerung und Versorgung einer Lichtquelle im Gehäuseinneren geführt.

Im Hohlraum eines Leuchtengehäuses können auch mehrere Leuchten mit eigenen Lichtquellen für unterschiedliche Funktionen untergebracht sein. Beispielsweise können für eine Heckleuchtenanordnung Rücklicht, Bremslicht und Blinker in einem gemeinsamen Gehäuse untergebracht sein. Es zeigt sich, dass die bekannten Fahrzeugleuchten langfristig häufig Undichtigkeiten aufweisen und dadurch Funktionsausfälle auftreten.

Bei einer aus der DE 203 04 930 U1 bekannten Fahrzeugleuchte ist eine als Lichtquelle eingesetzte Leuchtdiode mit PUR-Material in einer Mulde des Gehäusebodens eingegossen, so dass nur noch die Lichtabstrahlfläche der Diodenlinse über das PUR-Material hinaus in den Hohlraum des Gehäuses ragt. Die Gehäusefuge zwischen Lichtscheibe und Gehäuseboden ist in einer Form umspritzt.

Die DE 10 232 894 A1 beschreibt eine Kraftfahrzeugleuchte, bei welcher eine Leuchtdiode auf einem Flexleiter angeordnet und zusammen mit diesem in eine elastische transparente Kunststoffvergussmasse eingegossen ist welche einen Leuchtenkörper mit gewölbter Lichtaustrittsfläche bildet. Ein Reflektor für das von der Leuchtdiode emittierte Licht ist gleichfalls in die Vergussmasse eingeschlossen.

Die US 6 739 733 B1 beschreibt eine bruchfeste LED-Leuchte und ein Verfahren zu deren Herstellung. Dabei wird ein Schaltungsträger mit einer Mehrzahl von Leuchtdioden in eine Gussform eingelegt. Die Gussform wird mit einer flüssigen Kunststoff-Vergussmasse gefüllt, welche nach Verfestigung einen transparenten Leuchtenkörper bildet und aus der Gussform entnommen wird.

Vollvergossene Lichteranordnungen mit Glühlampen oder Leuchtdioden in transparenten flexiblen Kunststoff sind als dekorative Beleuchtungen, insbesondere als sogenannte Lichtschlauchanordnungen oder Lichtbänder an sich bekannt. Je nach Art der Ansteuerungseffekte, z. B. einfarbig, mehrfarbig, Lauflicht können zwei oder mehr Adern für Ansteuerung und Leistungsversorgung der Lichtquellen vorgesehen sein. Die Technik des Ummantelns ist dem Fachmann zumindest teilweise prinzipiell bekannt, z. B. aus der DE 696 32 848 T2.

Der Erfindung liegt die Aufgabe zugrunde, eine vorteilhafte Fahrzeugaußenleuchte sowie ein Verfahren zur Herstellung einer solchen anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Ausbildungen des Leuchtenkörpers, welcher die wenigstens eine elektronische Lichtquelle und die Leitungsanordnung enthält, als ein Vergusskörper aus einer isolierenden Vergussmasse, welche Lichtquelle und Leitungen im wesentlichen hohlraumfrei ummantelt, führt trotz der erschwerten Verlustwärmeabfuhr und der dadurch typischerweise höheren Betriebstemperatur der Lichtquelle überraschend zu einer erheblich verringerten Ausfallrate solcher Fahrzeugaußenleuchten. Die Erfindung macht sich die Erkenntnis zunutze, dass in herkömmlichen Fahrzeugleuchten Ausfälle primär durch Undichtigkeiten des Leuchtengehäuses verursacht sind weiche u. a. dadurch mit bedingt sind, dass durch starke Temperaturschwankungen, z. B. durch wechselnde Sonneneinstrahlung auf die Leuchte, im Leuchteninnem erhebliche Druckschwankungen auftreten und einen Pumpeffekt bewirken, durch welchen Feuchtigkeit über trotz Abdichtungen vorhandene oder im Laufe der Zeit entstehende kleine Leckpfade ins Innere gelangt.

Zur Herstellung einer solchen Leuchte wird in einer ersten vorteilhaften Variante die Lichtquelle mit Leitungsanordnung in eine Gussform eingesetzt und mit Vergussmasse ummantelt. Die Vergussmasse kann z. B. als thermoplastisches Material unter erhöhtem Druck und/oder erhöhter Temperatur im Spritzgussverfahren in die Form eingebracht werden oder als gussfähige, vorzugsweise dünnflüssige Masse eingefüllt und in der Form verfestigt werden. Die Gussform bestimmt nach Verfestigung der Vergussmasse die äußere Gestalt des fertigen Leuchtenkörpers.

Die Gussform wird zumindest teilweise durch ein vorgefertigtes Gehäuseteil gebildet, welches am fertigen Leuchtenkörper fest mit der Vergussmasse verbunden bleibt und einen Teil der Oberfläche des Leuchtenkörpers bildet.

Gemäß einer anderen Herstellungsvariante wird der Leuchtenkörper im Extrusionsverfahren hergestellt, wobei Lichtquelle und Leitungsanordnung während der Extrusion durch die Extrusionsdüsenanordnung geführt und von der extrudierten Vergussmasse umflossen werden. Dies ist insbesondere zur Herstellung langgestreckter zusammenhängender Leuchtenkörper, insbesondere für einen bandförmigen Leuchtenkörper, welcher als Lichtquelle in Längsrichtung voneinander beabstandet mehrere dem Benutzer als Einzelleuchten oder als Leuchtenband erscheinende Leuchtmittel, insbesondere Leuchtdioden enthält, von Vorteil. Es können aber auch in einem Extrusionsvorgang mehrere Leuchten zusammenhängend hergestellt werden, welche nachfolgend als Abschnitte des extrudierten Strangs abgeschnitten und separiert werden. Die Lichtquellen und Leitungsanordnungen zu einer Leuchte oder zu einzelnen Leuchten eines solchen Leuchtenverbunds können bereits vor der Extrusions-Ummantelung mit einer Anschlussvorrichtung versehen sein, welche später wieder freigelegt wird.

Bei der Herstellung der Leuchtenkörper aus verfestigter Vergussmasse können weitere Elemente der Leuchte, wie z. B. elektrische Anschlusselemente oder mechanische Befestigungselemente mit in die Vergussmasse eingeschlossen werden und auch teilweise aus dieser hinausragen. Es können ferner auch weitere Elemente, wie z. B. Reflektoreinrichtungen mit in den Vergusskörper aufgenommen werden.

Die Vergussmasse des Vergusskörpers ist vorteilhafterweise zumindest in einer Haupt-Abstrahlrichtung der Lichtquelle transparent. Vorzugsweise ist der gesamte Vergusskörper materialhomogen. Lichtquelle und Leitungsanordnung sind vorteilhafterweise allseitig von Vergussmasse umschlossen, wobei nach außen führende elektrische Leitungen durch die Oberfläche des Vergusskörpers hindurchtreten und dort von einem Fortsatz des Vergusskörpers umschlossen sein können.

Ein Teil der Oberfläche des Leuchtenkörpers wird durch eine Schutzschicht über dem Vergusskörper gebildet welche insbesondere eine höhere Kratzfestigkeit und/oder eine geringere Oberflächenrauigkeit aufweisen kann. Diese Schutzschicht wird durch ein vorgefertigtes Gehäuseteil gebildet, welches für die Herstellung des Vergusskörpers als Teil der Form für die Vergussmasse dient. An einem solchen Gehäuseteil können auch Befestigungsvorrichtungen zur Befestigung der fertigen Leuchte an einem Fahrzeug vorbereitet sein. Das Gehäuseteil kann in vorteilhaften Ausführungen, z. B. topfförmig oder als Profilstrang ausgebildet sein.

Die Lichtquelle ist vorzugsweise durch eine oder mehrere Leuchtdioden (LED) als lichtemittierende Elemente gebildet. Mehrere funktionell und räumlich eine Einheit bildende lichtemittierende Elemente, wie z. B. ein Array von mehreren LED seien als eine Lichtquelle bezeichnet. Zur Lichtquelle gehörig seien auch noch weitere im Vergusskörper eingeschlossene elektronische Bauteile, wie Vorwiderstände, Umformer, Regler etc. verstanden. Die im Vergusskörper eingeschlossene Leiteranordnung kann insbesondere elektrische Verbindungsleitungen nach außerhalb des Vergusskörpers für den Betrieb der Lichtquelle enthalten. Für den Betrieb der Lichtquelle können auch Leiterbahnen auf einer ein lichtemittierendes Element und/oder weitere Bauteile tragenden Leiterplatte als Teil der Leitungsanordnung vorgesehen sein. Die Platine kann starr oder auch als flexible Folie ausgeführt sein.

Die mehreren Leitungen der Leitungsanordnung oder einige dieser Leitungen können vorteilhafterweise bereits vor dem Ummanteln mit der Vergussmasse mechanisch in einem Leitungsträger verbunden sein. Der Leitungsträger kann ganz oder teilweise starr oder flexibel ausgeführt sein. Insbesondere für die Herstellung eines bandförmig langgestreckten zusammenhängenden flexiblen Leuchtenkörpers, z. B. für eine Seitenmarkierungsleuchtenanordnung, kann der Leitungsträger vorteilhafterweise als flexibles Band ausgeführt sein.

Die Leitungsanordnung kann zusätzlich zu den für den Betrieb der jeweiligen Leuchte oder Leuchten des Leuchtenkörpers benötigten Leitungen weitere Leitungen enthalten, welche lediglich durch den Leuchtenkörper zwischen einem Leitungseingang und einem Leitungsausgang hindurchgeführt sind. Auch die für den Betrieb der von dem Vergusskörper umschlossenen Leuchte können zwischen einem Leitungseingang und einem Leitungsausgang durchgeführt sein, so dass mehrere Leuchtenkörper gegebenenfalls unter Zwischenfügen von Kabelabschnitten von einer elektrischen Leitungsquelle aus nacheinander elektrisch verbunden werden können.

Die äußere Form ist vorteilhafterweise weitgehend beliebig. Eine vorteilhafte Ausführungsform sieht vor, dass der Leuchtenkörper im wesentlichen prismatisch mit in einer Längsrichtung annähernd konstanter Querschnittsform ausgeführt ist. Dies ist insbesondere von Vorteil in Verbindung mit der Herstellung eines Leuchtenkörpers durch Extrudieren einer Vergussmasse und/oder durch Verwenden eines vorgefertigten Profils als Teil der Gussform. In vorteilhafter Ausführung kann der Leuchtenkörper an einer dem Fahrzeug abgewandten und typischerweise in Richtung der Haupt-Abstrahlrichtung der Leuchte weisenden Außenfläche wenigstens einen, vorzugsweise wenigstens zwei bezüglich einer durchstrahlten Fläche seitlich gegenüberliegend angeordnete Vorsprünge aufweisen, welche vom Fahrzeug weg gerichtet über die durchstrahlte Fläche hinausstehen und diese dadurch gegen mechanische Beschädigung schützen können. Es kann auch ein um die durchstrahlte Fläche umlaufender Vorsprung vorgesehen sein.

Für die Befestigung der Leuchte an einem Fahrzeug können Befestigungselemente bei der Herstellung des Vergusskörpers von diesen in der Art mit eingeschlossen werden, dass sie an fertigen Leuchtenkörper von außen zugänglich sind, z. B. als Gewindehülsen oder Gewindebolzen, als hinterschnittene Aufnahmen für weitere Befestigungselemente oder in Form anderer, dem Fachmann an sich bekannter Befestigungsarten. Die umgossenen Befestigungselemente können die zu umschließenden Komponenten während des Vergussvorgangs in definierter Position in der Form halten.

Der Leuchtenkörper kann bezüglich einer Haupt-Abstrahlrichtung seitlich liegend Befestigungsbereiche aufweisen, in welchen Befestigungsstrukturen, wie Durchbrüche oder Vorsprünge vorbereitet sein oder ohne Beeinträchtigung der Leuchtenfunktion nachträglich hergestellt werden können. Solche Befestigungsstrukturen können insbesondere auch an einem als Teil der Gussform vorbereiteten Gehäuseteil ausgebildet sein.

Zur elektrischen Kontaktierung der umgossenen Leiteranordnung kann beispielsweise vorgesehen sein, dass Leitungen bis an die Außenfläche des Vergusskörpers führen und dort mit Zuleitungen von einer elektrischen Leistungsquelle oder mit Leitungen zu oder von an deren Leuchten elektrisch verbunden, vorzugsweise verlötet sind. Solche bis an die Außenfläche des Vergusskörpers führenden Leitungen der umgossenen Leitungsanordnung können hierfür auch durch Entfernen von Vergussmasse freigelegt und in den freigelegten Bereichen elektrisch angeschlossen werden. In anderer vorteilhafter Ausführungsform kann ein Kabelabschnitt als Teil der Leitungsanordnung an einem umgossenen Ende mit der Lichtquelle der Leuchte, mit weiteren Leitungen der Leitungsanordnung, mit weiteren Bauelementen etc. elektrisch verbunden und danach umgossen werden, wobei ein freies Ende des Kabelabschnitts aus der Gussform bzw. dem verfestigten Gusskörper als Anschlusskabel herausgeführt und in einer gebräuchlichen Weise angeschlossen sein kann.

Vorteilhaft ist ferner ein elektrischer Anschluss mittels die isolierende Vergussmasse des fertigen Leuchtenkörpers bis zu Leitungen der umschlossenen Leitungsanordnung nachträglich durchdringender Kontaktspitzen oder Kontaktschneiden. Die auf eine solche Art zu kontaktierenden Leitungen der Leitungsanordnung können hierfür in besonderer, von anderen Leitungen der Leitungsanordnung gegebenenfalls abweichender Form ausgeführt sein, insbesondere als Geflecht dünner Drähte, als leitendes Polymer etc. bei der Anschlussvariante mit Spitzen- oder Schneidenkontaktierung durch die verfestigte Vergussmasse hindurch kann bei der Herstellung des Vergusskörpers die Leitungsanordnung vollständig ohne zur Außenfläche des Vergusskörpers oder durch diese hindurch führende Leitungen umgossen werden. Die zu kontaktierenden Leitungen können auch in einem weicheren Isoliermaterial als das Vergussmaterial eingebettet sein, welches bis an die Oberfläche des Vergusskörpers reicht oder nur von einer dünnen Schicht Vergussmaterial bedeckt ist oder vor der Kontaktierung von Vergussmaterial befreit wird.

Die Erfindung ist nachfolgend anhand bevorzugter Ausführungsbeispiele unter Bezugnahme auf die Abbildungen noch eingehend veranschaulicht. Dabei zeigt:
- Fig. 1: Teile einer ersten Leuchtenausführung mit topfförmiger Lichtscheibe,
- Fig. 2: einen Schnitt durch eine vergossene Leuchte nach Fig. 1,
- Fig. 3: Teile einer Leuchte mit Profil-Lichtscheibe,
- Fig. 4: einen Schnitt durch eine vergossene Leuchte nach Fig. 3,
- Fig. 5: eine Schrägansicht einer Leuchte ohne separate Lichtscheibe,
- Fig. 6: die Leuchte nach Fig. 5 von der Rückseite,
- Fig. 7: Teile einer weiteren vorteilhaften Ausführung,
- Fig. 8: eine Seitenansicht einer Leuchte nach Fig. 7,
- Fig. 9: einen bandförmig extrudierten Leuchtenkörper,
- Fig. 10: eine Leuchtenanordnung mit Verbindungskabel,
- Fig. 11: eine Leuchtenanordnung mit bandförmigem, durchgehendem Leuchtkörper.

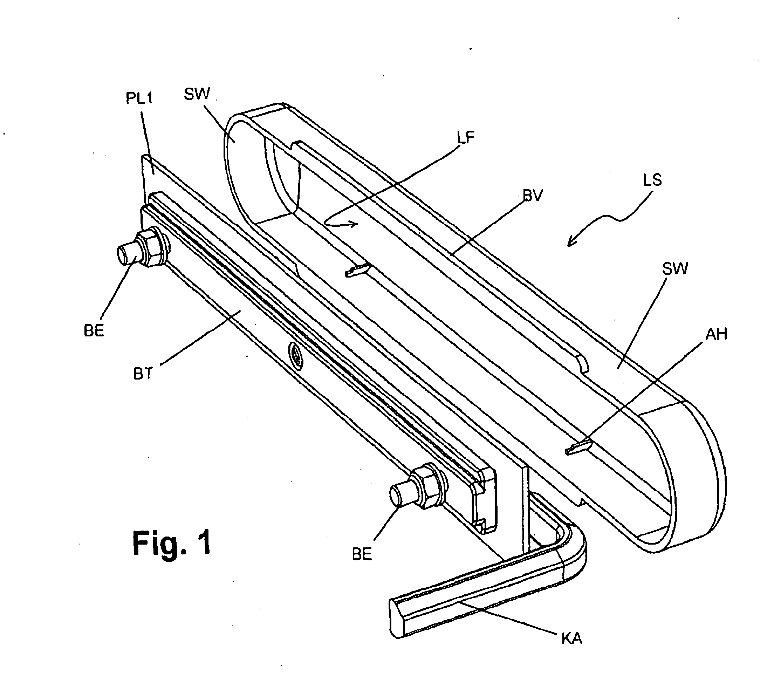

In Fig. 1 sind Teile einer ersten vorteilhaften Ausführung einer Fahrzeugaußenleuchte nach der vorliegenden Erfindung skizziert. Die Außenkontur der Leuchte wird maßgeblich bestimmt durch eine topfförmig ausgebildete Lichtscheibe LS aus transparentem Material, welche vorzugsweise als Spritzgussteil aus Kunststoff hergestellt ist. Die Lichtscheibe LS besteht im wesentlichen aus einer Lichtaustrittsfläche LF und Seitenwänden SW. Die Seitenwände umschließen im skizzierten Beispiel ovalförmig einen Innenraum. An den Seitenwänden, dem Innenraum zugewandt, sind Abstandshalter AH vorgesehen, um eine Lichtquellenanordnung in definierter Position innerhalb des von der Lichtscheibe mehrseitig umgebenen Innenraums zu halten. Der von der Lichtscheibe mehrseitig umschlossene Innenraum ist in der Lichtdurchtrittsfläche LF abgewandter Richtung offen. Von dieser offenen Seite wird eine Lichtquellenanordnung in den Hohlraum eingesetzt, welche auf einer Platine PL1 wenigstens eine Lichtquelle aufweist. Vorteilhafterweise kann die Lichtquellenanordnung eine Mehrzahl von einzelnen Lichtquellen, welche insbesondere als Leuchtdioden ausgebildet sein können, aufweisen, welche auch unterschiedlichen Beleuchtungsfunktionen innerhalb der Fahrzeugleuchtenanordnung zugeordnet sein können. Die elektronischen Lichtquellen sind auf der der Lichtdurchtrittsfläche LF zugewandten Seite der Platine PL1 angeordnet. Auf der Platine PL1 können ferner weitere Bauelemente wie Vorwiderstände, Regler oder Begrenzer zur Zusammenwirkung mit den Lichtquellen vorgesehen sein. Die Platine PL1 weist vorteilhafterweise elektrische Leitungen, insbesondere in Form von gedruckten oder geätzten Leiterbahnen auf, welche zur Verbindung der Lichtquellen untereinander, mit den weiteren Bauelementen und mit einer elektrischen Zuleitung dienen.

Ein Anschlusskabel KA ist mit den Leitungen auf der Platine PL1 verbunden und dient zur Ansteuerung und elektrischen Leistungsversorgung der Lichtquellen auf der Platine. Das Anschlusskabel KA ist im skizzierten Beispiel auf die als Vorderseite bezeichnete, der Lichtaustrittsfläche LF zugewandte Seite der Platine PL1 geführt und dort befestigt, beispielsweise verklebt. Das Anschlusskabel KA weist mehrere gegeneinander isolierte Adern auf, deren Anzahl von der Anzahl unterschiedlicher Beleuchtungsfunktionen auf der Platine PL1 abhängen kann. Das Kabel KA ist im skizzierten Beispiel von der Vorderseite der Platine PL1 nach hinten umgelenkt.

Auf der Rückseite der Platine PL1 ist ein Haltekörper BT befestigt, welcher zwei Befestigungselemente BE, beispielsweise Schraubbolzen trägt, welche zur Befestigung der fertigen Leuchte an einem Fahrzeug dienen können. Die Befestigungselemente können auch beim Verguss der Platine dazu benutzt werden, die relative Lage der Platine bezüglich der topfförmigen Lichtscheibe bis zur Verfestigung von Vergussmaterial zu gewährleisten. Zur alternativen Befestigung der fertigen Leuchte können auch an der Lichtscheibe LS, insbesondere von dieser nach außen abragend Befestigungsvorrichtungen BV vorgesehen sein, welche im skizzierten Beispiel als Vorsprünge zum Einschieben der Leuchte in ein Halteprofil ausgeführt sind.

Die Platine PL1 mit Kabel KA, rückseitigem Träger BT und Befestigungselementen BE wird in die topfförmige Lichtscheibe LS eingesetzt und der Hohlraum der Lichtscheibe wird im wesentlichen vollständig und hohlraumfrei mit einem Vergussmaterial aufgefüllt, welches sowohl zwischen Platine PL1 und Lichtdurchtrittsfläche LF als auch auf der der Lichtdurchtrittsfläche LF abgewandten Seite der Platine beigebracht wird und die topfförmige Lichtscheibe LS im wesentlichen hohlraumfrei und blasenfrei ausfüllt. Das Vergussmaterial kann als thermoplastisches Material in einem Spritzgussverfahren eingebracht werden oder kann als dünnflüssiges Material in die als Gussform dienende Lichtscheibe eingegossen werden. Das Einbringen des dünnflüssigen Materials kann auch in zwei Schritten erfolgen, wobei in einem ersten Schritt die leere Gussform teilweise mit Vergussmaterial eingefüllt, dann die Platine mit Lichtquelle und Kabel eingesetzt und schließlich die Gussform mit Vergussmaterial aufgefüllt wird.

Nach Verfestigung des Vergussmaterials liegt eine fertige Leuchte vor, in welcher die elektronischen Lichtquellen, die gegebenenfalls vorhandenen weiteren elektronischen Bauteile und die elektrischen Leitungen dauerhaft wasserdicht vergossen vorliegen. Das Vergussmaterial wird vorteilhafterweise so gewählt, dass es mit der Lichtscheibe und vorzugsweise auch mit der Platine, dem Kabel KA und/oder dem Träger BT auf der Rückseite der Platine haftfeste und kriechwasserdichte Grenzflächen bildet.

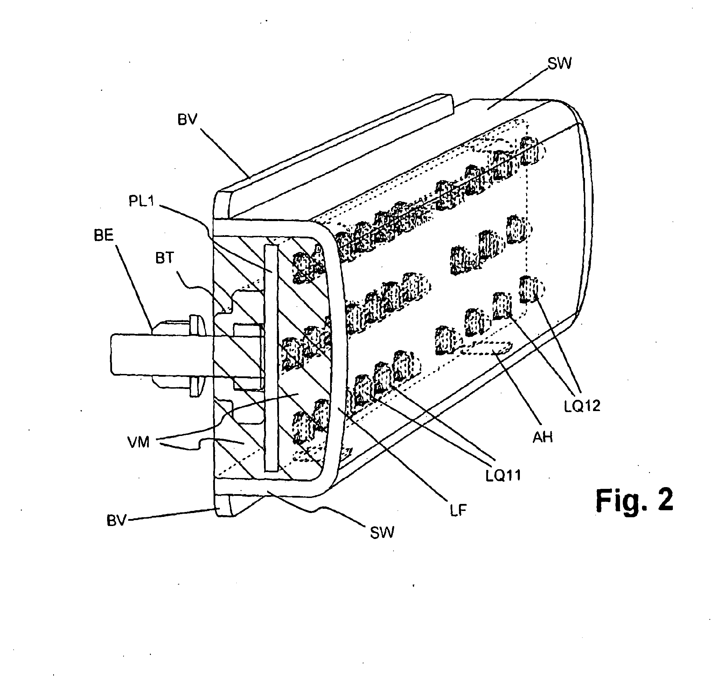

In Fig. 2 ist aufgeschnitten in Schrägansicht von vorne eine fertig vergossene Leuchte der in Fig. 1 mit Komponenten dargestellten Art skizziert. Auf der Vorderseite der Platine sind erste Lichtquellen LQ11 für eine erste Beleuchtungsfunktion und zweite Lichtquellen LQ12 für eine zweite Beleuchtungsfunktion der Fahrzeugaußenleuchte angeordnet. Vergussmaterial VM befindet sich sowohl zwischen Platine und Lichtaustrittsfläche LF als auch auf der der Lichtaustrittsfläche LF abgewandten Seite der Platine. Erkennbar ist, dass am oberen und am unteren Rand der Platine aufgrund der Abstandshalter AH jeweils ein Spalt die beiden Teilvolumina des Vergussmaterials verbindet, was sowohl für die Ausbreitung des Vergussmaterials beim Einbringen in die topfförmige Lichtscheibe als auch für die dauerhafte Verbindung der Vergussmasse im fertigen Zustand von Vorteil ist. Die Platine PL1 kann zusätzlich Durchbrüche in der Platinenfläche aufweisen, durch welche weitere materialhomogene Verbindungen des Vergussmaterials hindurchgreifen können.

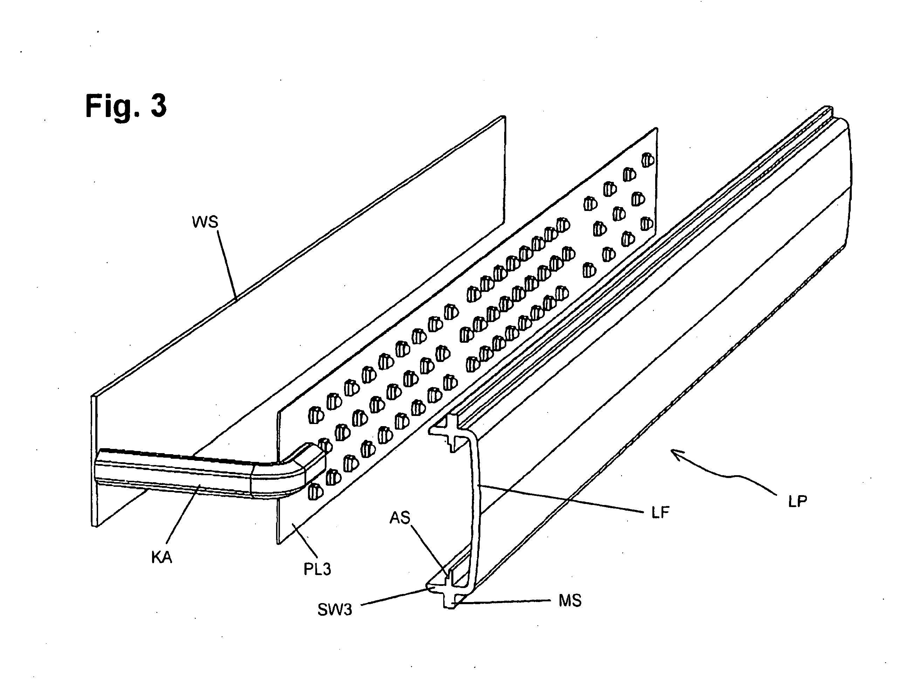

Bei der in Fig. 3 skizzierten Ausführung ist wiederum eine Lichtscheibe LP als Begrenzung der Leuchte in Haupt-Lichtabstrahlrichtung vorgesehen. Diese Lichtscheibe LP ist im Unterschied zur Fig. 1 als Profil mit in einer Längsrichtung konstantem Querschnitt ausgeführt, welches als Spritzgussteil oder insbesondere auch als extrudiertes Profil ausgeführt sein kann. Für die Positionierung einer Platine relativ zu der Lichtscheibe können an dem Profil Zentriervorrichtungen, wie beispielsweise eine Anschlagschulter AS vorgesehen sein. Von der Position der Platine nach hinten weg weisend sind Seitenwände SW3 des Profils vorgesehen. Von diesen seitlich nach außen abstehend können, insbesondere zur Befestigung der fertigen Leuchte, Befestigungsvorrichtungen beispielsweise in Form von Montagestegen MS an dem Profil vorgesehen sein.

Auf einer Platine PL3 seien wieder eine Mehrzahl von Lichtquellen vorgesehen, welche unterschiedlichen Beleuchtungsfunktionen einer Fahrzeugbeleuchtungsanordnung zugeordnet sein können. Ein mehradriges Kabel KA ist wieder auf der Vorderseite der Platine befestigt und dient zur Ansteuerung und elektrischen Versorgung der einzelnen Lichtquellen über Leitungen auf der Platine. Eine weitere Platte WS besteht aus gut wärmeleitendem Material, beispielsweise Aluminium, und wird gut wärmeleitend mit der Rückseite der Platine PL3 verbunden, insbesondere verklebt. Bei hinreichender Stabilität der Platte WS kann die Platine PL3 auch mit besonders geringer Dicke als Folienplatine oder dergleichen ausgebildet sein. Die Platte WS kann auch in einem Verbund mit der Platine PL3 vorliegen. Anstelle einer Platte PL3 kann auch ein anders geformtes Element, beispielsweise ein Profil, aus wärmeleitendem Material vorgesehen sein.

Platine PL3 und Platte WS werden in definierter Position in die als Profil ausgebildete Lichtscheibe LP eingesetzt, wobei vorteilhafterweise sich Platine PL3 und Platte WS nur über einen Teil der Länge des Profils LP erstrecken und an beiden Enden des Profils Endabschnitte vorliegen, welche nach hinten nicht durch Platine PL3 und/oder Platte WS abgedeckt sind. Die Endbereiche werden durch weitere Formwände abgeschlossen und Vergussmaterial wird in den mehrseitig von dem Profil LP umgebenen Innenraum mit der Platine und der Platte WS eingebracht und füllt den Innenraum bis zu den Enden der Seitenwände SW3 im wesentlichen vollständig aus. Die Rückseite des Innenraums an den Enden der Seitenwände SW3 kann zusätzlich durch eine Formwand abgeschlossen sein, was insbesondere bei Befüllen des Innenraums des Profils im Spritzgussverfahren erforderlich ist. Die zusätzlichen, den Innenraum der Lichtscheibe begrenzenden Formwände können an der fertigen Leuchte verbleiben oder Teile einer mehrfach verwendbaren Form bilden.

Die Verwendung einer vorgefertigten Lichtscheibe als Teil einer Gussform bietet die Möglichkeit, für die der Umgebung zugewandte Fläche der Fahrzeugaußenleuchte ein von dem Vergussmaterial für den Innenraum verschiedenes Material zu verwenden. Insbesondere kann die Lichtscheibe LS bzw. LP aus einem Material bestehen, welches eine höhere Schlagzähigkeit und/oder eine höhere Kratzfestigkeit und/oder eine geringere Rauhigkeit usw. besitzt als das Vergussmaterial. Das Vergussmaterial ist dauerhaft transparent und kann beispielsweise ein Thermoplast, insbesondere ein thermoplastisches Elastomer für eine Befüllung des Innenraums der Lichtscheibe im Spritzgussverfahren sein. In anderer Ausführung, insbesondere für die Befüllung des Innenraums der Lichtscheibe bei Normaldruck kann das Vergussmaterial einem Ausgangszustand vorteilhafterweise dünnflüssiges Harz und/oder Polymer oder eine Mehrkomponentenmischung beispielsweise auf der Basis von Polyurethan sein und in der teilweise durch die Lichtscheibe gebildeten Form nach verschiedenen, an sich bekannten Mechanismen sich verfestigen oder durch zusätzliche Einwirkung von außen, insbesondere thermisch oder elektromagnetische Strahlung, z. B. UV-Licht, verfestigt werden.

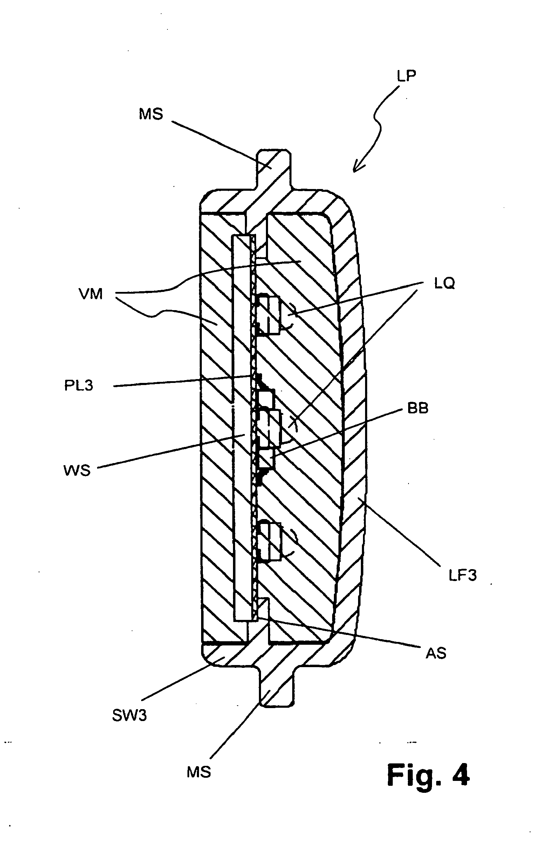

In Fig. 4 ist in geschnittener Seitenansicht eine fertig vergossene Leuchte der in Fig. 3 in Einzelteilen skizzierten Ausführung einer Fahrzeugleuchte skizziert. Lichtquellen LQ mit besonders hoher Verlustleistung können auch in Aussparungen der Platine PL3 eingesenkt sein und hierdurch einen verbesserten Wärmekontakt zu der Platte WS, welche als Wärmespreizer mit schneller großflächiger Verbreitung der Verlustwärme wirkt, stehen.

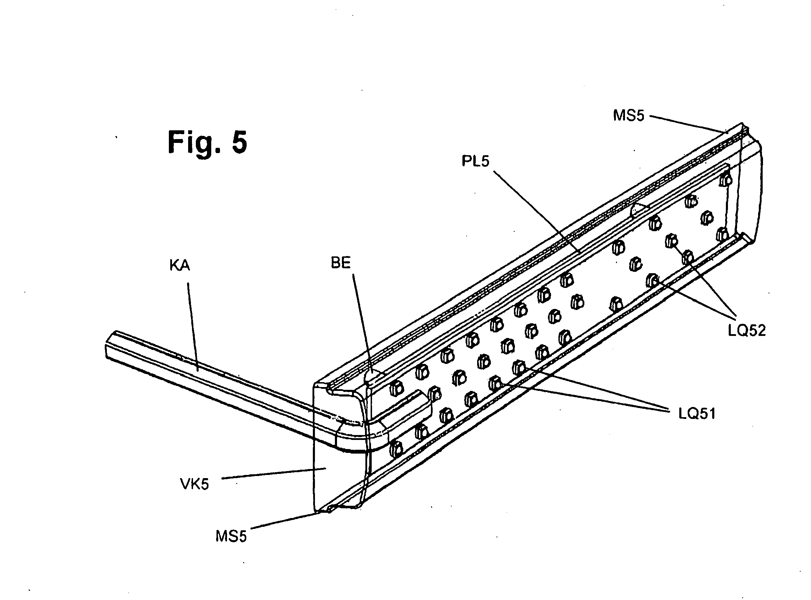

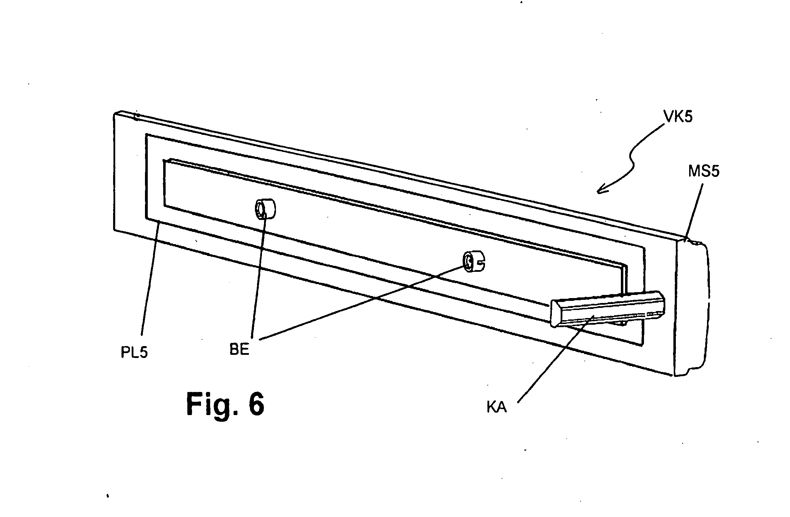

In Fig. 5 ist in Schrägansicht von vorne und in Fig. 6 in Schrägansicht von hinten eine weitere vorteilhafte Ausführung einer Fahrzeugleuchte skizziert. Hierbei ist ähnlich der Ausführung nach Fig. 1 und Fig. 2 eine Platine PL5 mit einer Mehrzahl von Lichtquellen LQ51, LQ52 für unterschiedliche Beleuchtungsfunktionen vorgesehen, von welcher ein Verbindungskabel KA nach hinten umgelenkt weggeführt ist. Auf der Rückseite der Platine PL5 sei wieder ein im wesentlichen starrer Träger BT mit Befestigungselementen BE vorgesehen. Der Träger BT kann auch zugleich zur Abfuhr und flächigen Verteilung von Verlustwärme von Lichtquellen auf der Vorderseite der Platine PL5 dienen.

Die Außenform der Leuchte ist ähnlich dem Ausführungsbeispiel nach Fig. 3 und Fig. 4 nach Art eines Profils mit in einer Längsrichtung konstantem Querschnitt angenommen, von welchem Montagestege MS5 zur Halterung der Leuchte in einem Profil abstehen können.

Im Unterschied zu den vorhergehenden Ausführungsformen enthält die Leuchte nach Fig. 5 und Fig. 6 keine separate Lichtscheibe. Der gesamte Leuchtenkörper VK5 besteht materialhomogen aus einer transparenten Vergussmasse, welche Platine PL5 mit Lichtquellen, Leitungen, gegebenenfalls weiteren elektronischen Bauteilen, Kabel und rückwärtigen Träger BT mit Befestigungselementen BE allseitig umschließt. Zur Herstellung der Fahrzeugaußenleuchte nach Fig. 5 und Fig. 6 ist eine wieder verwendbare Form, welche die Außenform der Leuchte bestimmt, vorbereitet, in welche die Platine mit Kabel und rückseitigem Träger mit Befestigungselementen BE eingesetzt wird, wobei die Befestigungselemente BE zur definierten Halterung der Einheit aus Platine PL5, Kabel KA und Träger BT in der Gussform herangezogen werden können.

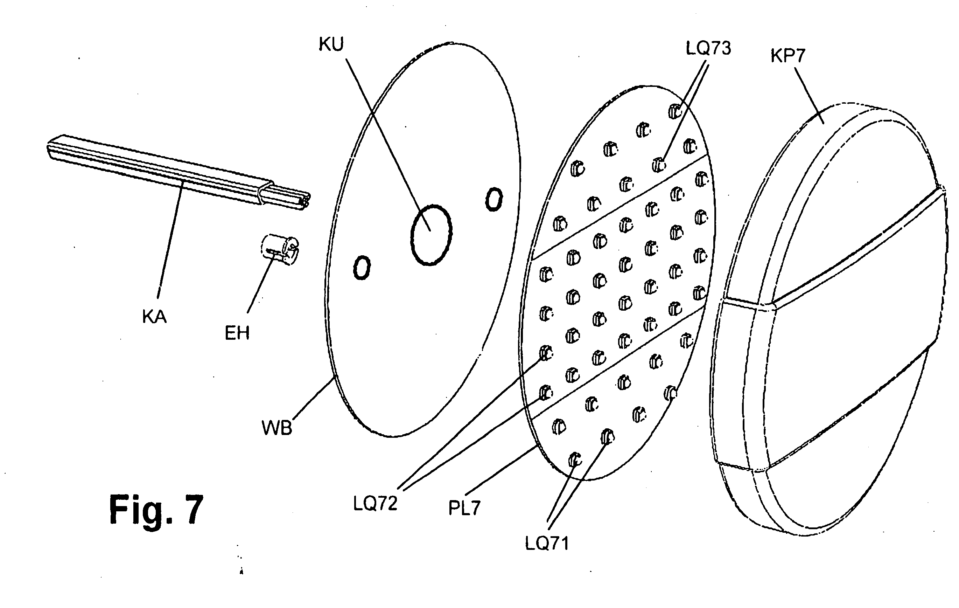

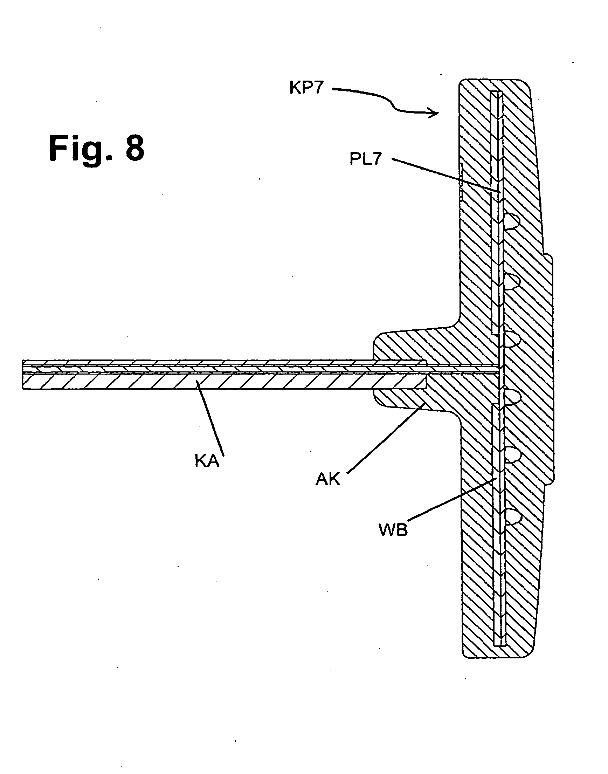

Eine weitere vorteilhafte Ausführungsform einer Fahrzeugleuchte ist in Fig. 7 mit den eingesetzten Komponenten in Schrägansicht und in Fig. 8 im fertigen Zustand in Seitenansicht dargestellt. Die Leuchte ist im wesentlichen aus einer kreisrunden Platine PL7 mit einer Mehrzahl von Leuchtdioden, welche in Gruppen LQ71, LQ72 und LQ73 aufgeteilt sind, und einer mit der Rückseite der Platine zu verbindenden Wärmeleitplatte WB aus Aluminium, einem Kabel KA und einem die vorstehend in zusammengesetztem Zustand einschließenden Körper KP7 aus Vergussmaterial gebildet. Zur Befestigung der fertigen Leuchte an einem Fahrzeug kann vorgesehen sein, dass Gewindehülsen EH in der Platte WB befestigt sind und von dieser nach hinten abstehen und bis zur hinteren Außenfläche des Vergusskörpers KP7 reichen. In dem Vergusskörper KP7 sind die Positionen der einzelnen, von dem Vergusskörper KP7 im fertigen Zustand umschlossenen Komponenten der Leuchte mit eingezeichnet. Der Vergusskörper existiert selbstverständlich nicht als eigenständiges Teil der Fahrzeugleuchte, sondern ist in Fig. 7 lediglich der Anschaulichkeit und Vollständigkeit halber als weitere Komponente mit eingezeichnet. Der Vergusskörper tritt nur als die anderen Komponenten umschließender Körper aus Vergussmasse an der fertigen Leuchte auf.

In dem Beispiel der Fahrzeugaußenleuchte nach Fig. 7 und Fig. 8 ist das Kabel von hinten durch die Platte WB zu der Platine PL7 geführt, wofür in der Platte WB eine zentrale Aussparung KU eingebracht ist, durch welche die vom Kabelmantel befreiten Adern des Anschlusskabels KA hindurchgeführt sind. Aus der Seitenansicht nach Fig. 8 ist insbesondere auch ersichtlich, dass sich der einstückige und materialhomogene Körper KP7 aus Vergussmaterial an seiner Rückseite entlang des Kabels mit einem Ansatz AK fortsetzt, welcher das Kabel KA im ummantelten Bereich umgibt und durch feste Haftung des Vergussmaterials auf dem Kabelmantel das Kabel ausziehsicher in dem Leuchtenkörper hält. Je nach Steifigkeit des verfestigten Vergussmaterials kann der Fortsatz AK auch als eine Art Knickschutz für das Kabel KA wirken.

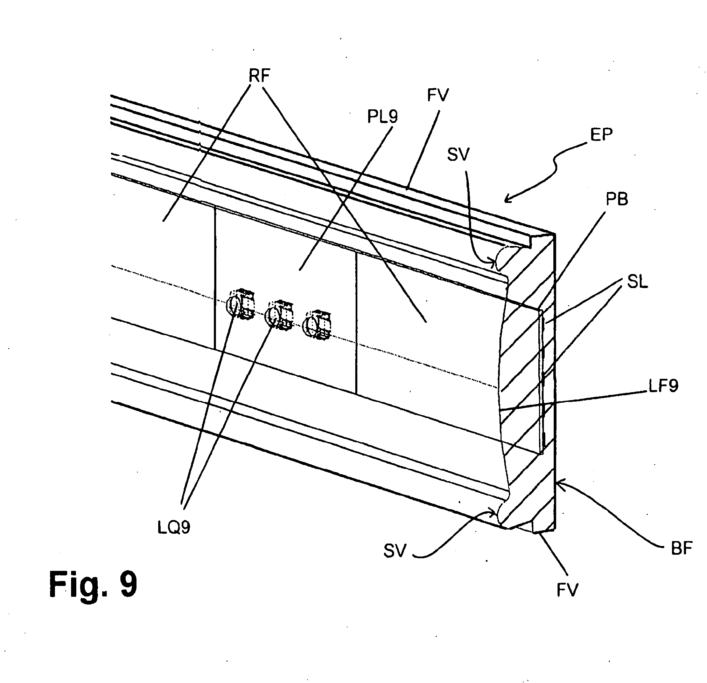

Eine besonders vorteilhafte Ausführung einer Fahrzeugaußenleuchte ist in Fig. 9 skizziert. Bei dieser Leuchtenform ist der Leuchtenkörper durch ein extrudiertes Kunststoffprofil gebildet, in welches Lichtquellen LQ9 und Leiterbahnen SL voll ummantelt in den Kunststoff des Vergussmaterials eingebettet sind. Eine derartige Fahrzeugaußenleuchte wird vorteilhafterweise in der Art hergestellt, dass eine Lichtquellenanordnung mit den elektrischen Leitern SL und Lichtquellen LQ sowie gegebenenfalls weiteren Elementen vorbereitet und beim Extrusionsvorgang des Profils durch die Extrusionsdüse zugeführt wird, wobei beim Extrusionsvorgang zugleich die zugeführten Bauteile fest und im wesentlichen hohlraumfrei durch Kunststoff umschlossen werden. Die einzelnen zu ummantelnden Bauteile sind vorteilhafterweise bandförmig zusammenhängend vorbereitet. Insbesondere können die mehreren elektrischen Leitungen SL in einem bandförmigen, vorzugsweise flexiblen Träger mechanisch untereinander verbunden sein, wobei der flexible Träger vorteilhafterweise als flexible Folienplatine oder Platinenband ausgeführt sein kann und weitere Leiterbahnen zur Kontaktierung der Lichtquellen LQ9 mit wenigstens zwei der Leitungen LS aufweisen kann. Die Leitungen SL können als Streifen aus einteilig massivem Metall oder einem anderen elektrisch leitfähigen Material, insbesondere auch einem leitfähigen Polymer, oder in anderer Ausführung aus einer Mehrzahl von metallischen Drähten nach Art einer Litze ausgeführt sein.

Die Leitungen SL der Leitungsanordnungen oder zumindest ein Teil dieser Leitungen sind in vorteilhafter Ausführung über die gesamte Länge des durch das extrudierte Kunststoffprofil gebildeten Leuchtenkörpers durchgehend ausgebildet. In bevorzugter Ausführungsform können in einer Fahrzeugaußenleuchte, insbesondere einer Seitenmarkierungsleuchte, innerhalb des extrudierten Kunststoffprofils mehr Leitungen SL in Längsrichtung durchgeführt sein als für den Betrieb der eingebetteten Lichtquellen dieser Leuchte benötigt werden. Die Leuchte kann dann zumindest abschnittsweise an die Stelle eines Verbindungskabels für nachfolgende Fahrzeugleuchten treten. Eine derartige Fahrzeugaußenleuchte in Form eines extrudierten Profils kann auch in der Weise ausgeführt sein, dass mehrere unterschiedliche Leuchtenfunktion in einem einheitlich zusammenhängenden Profilkörper eingebettet sind.

In vorteilhafter Weiterbildung kann eine Fahrzeugleuchtenanordnung auch innerhalb eines einteilig zusammenhängenden extrudierten Profils mehrere in Längsrichtung voneinander beabstandete Seitenmarkierungsleuchten entlang der Längsseite eines Fahrzeugs und ohne Unterbrechung eine Heckleuchtenanordnung mit vorzugsweise mehreren Heckleuchtenfunktionen enthalten und dabei unterbrechungsfrei um eine Ecke eines Fahrzeugs bzw. Fahrzeugaufbaus umgelenkt sein. Ein solches Profil kann in Weiterbildung auch in einteiliger Form die Seitenmarkierungsleuchten an beiden Längsseiten eines Fahrzeugs sowie am Heck des Fahrzeugs ohne Unterbrechung durchgehend die Heckleuchtenanordnung des Fahrzeugs enthalten und kann ferner direkt zu einem frontseitigen elektrischen Verteiler des Fahrzeugs führen, so dass die Fahrzeugleuchtenanordnung in diesem Umfang ohne zusätzliche Verbindungskabel ausgeführt und installiert werden kann. In anderer Ausführung können an den Eckbereichen auch gesonderte Eckverbinder zwischen längsseitigen Leuchtenkörpern und quer zur Längsrichtung ausgerichteten Heckleuchten angeordnet sein.

Die Kontaktierung der Leitungen SL zur Verbindung mit einer elektrisch zufühenden oder weiterführenden Leitung kann beispielsweise dadurch erfolgen, dass in einem Endbereich des Profils der ummantelnde Kunststoff entfernt und die Leiterbahnen frei gelegt und auf übliche Weise, beispielsweise durch Klemmen oder Verlöten mit anderen Leitungen verbunden werden. In anderer Ausführung kann ein Kabel oder eine Anschlussvorrichtung, z. B. eine Steckverbindung an den bandförmigen Leitungsträger PB bereits vor der Herstellung des Profils angeschlossen werden, welche dann später von der Ummantelung befreit oder nicht mit ummantelt wird. In wieder anderer, bevorzugter Ausführung kann die Kontaktierung der einzelnen Leitungen SL durch den Kunststoff des Profils EP hindurch mittels an sich bekannter Spitzenkontaktierung oder Schneidenkontaktierung erfolgen.

Die Lichtquellen LQ9, welche vorzugsweise wieder als Leuchtdioden ausgeführt sind, sind vorteilhafterweise über zusätzliche elektronische Bauelemente, wie Vorwiderstände, Regler, Begrenzer oder dergleichen, an Leitungen SL der Leitungsanordnung angeschlossen. Die Lichtquellen LQ9 sowie die weiteren, in Fig. 9 nicht mit eingezeichneten Bauelemente können auf einer separaten Platine PL9 angeordnet sein, welche vor dem Vergießen elektrisch mit den zur Versorgung dieser Lichtquellen vorgesehenen Leitungen SL der Leitungsanordnung elektrisch verbunden werden. In anderer, bevorzugter Ausführung kann ein die Leitungen SL mechanisch verbindender, vorzugsweise flexibler Leitungsträger als Platinenband PB ausgeführt sein, auf welchem bereits in einer vorzugsweise von den Leitungen SL getrennten Platinenebene weitere Leitungen und Anschlüsse für die Lichtquellen und Beschaltungselemente vorbereitet sind.

Mit der Leitungsanordnung verbunden sein kann eine einer Lichtaustrittsfläche LF9 des Profils zugewandte Reflektorvorrichtung RF, welche beispielsweise als reflektierende Folie oder als Reflexionslack ausgebildet sein kann. Eine solche Reflexionsvorrichtung kann auch durchgehend und die Lichtquellen LQ9 umgebend ausgeführt sein.

Das extrudierte Profil weist vorteilhafterweise von einer rückseitigen Befestigungsfläche BF des Profils abgewandt Vorsprünge SV auf, welche seitlich der Lichtaustrittsfläche LF9 liegen und von der Rückseite BF weg über die Lichtaustrittsfläche LF9 hinaus stehen. Die Vorsprünge SV können dadurch teilweise als mechanischer Schutz der Lichtaustrittsfläche LF9 wirken. Solche schützende Vorsprünge können auch in den anderen Ausführungsbeispielen vorgesehen sein.

Das Profil EP kann beispielsweise durch Aufkleben an einem Fahrzeug befestigt werden. In anderer Ausführung können, wie skizziert, an dem Profil nach oben und unten abstehende Vorsprünge FV vorgesehen sein, mit welchen das extrudierte Profil in einer am Fahrzeug vorliegenden Halterung, welche insbesondere gleichfalls ein Profil sein kann, gehalten wird. In wieder anderer, nicht gezeichneter Ausführung können im Verlauf des Profils, insbesondere quer zur Längsrichtung von der Lichtaustrittsfläche beabstandet, Befestigungsbereiche vorgesehen sein, durch welche Befestigungselemente zur Befestigung der Fahrzeugaußenleuchte an einem Fahrzeug hindurchgeführt werden können.

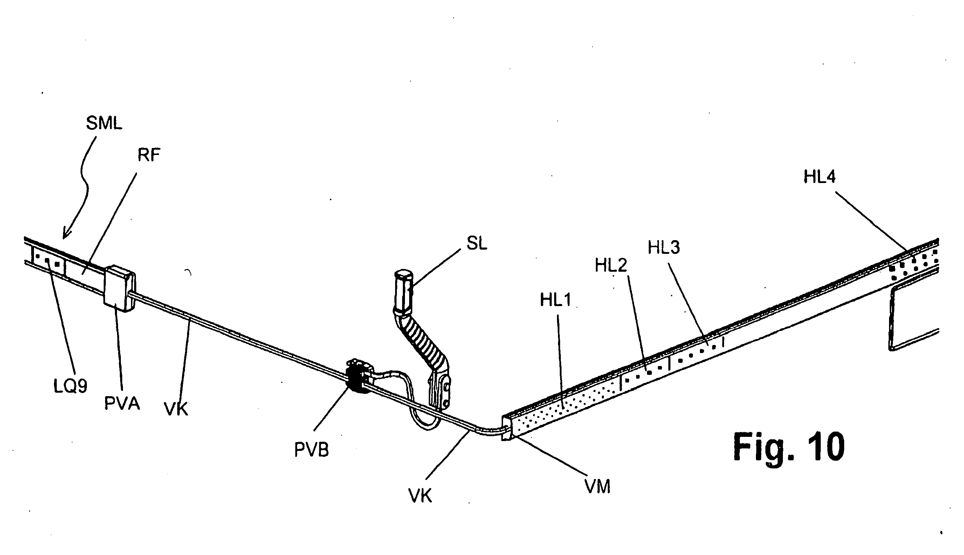

In Fig. 10 ist eine erste vorteilhafte Beleuchtungsanordnung eines Fahrzeugs, insbesondere eines Lastanhängers ausschnittsweise skizziert. Die Beleuchtungsanordnung enthält eine Seitenmarkierungsleuchten-Anordnung SML der in Fig. 9 skizzierten Art mit einem extrudierten Profil als Leuchtenkörper und eingebetteten Lichtquellen, Reflektorvorrichtungen und einer mehradrigen Leitungsanordnung, wobei die Leitungsanordnungen mehr Adern umfasst als für den Betrieb der Seitenmarkierungsleuchten erforderlich sind. Eine Heckleuchtenanordnung mit mehreren Heckleuchten HL1, HL2 und HL3 sei beispielsweise nach Art der in Fig. 3 skizzierten Leuchte mit einem angegossenen mehradrigen Verbindungskabel VK ausgeführt. Die Heckleuchten HL1, HL2, HL3 können insbesondere die Beleuchtungsfunktionen, wie Bremslicht, Rücklicht, Blinklicht, Rückfahrscheinwerfer, Arbeitsleuchten enthalten und als eine einteilige Leuchte mit einstückiger oder mehrteiliger Platine oder als kaskadierte Einzelleuchten ausgeführt sein. Die Heckleuchtenanordnung kann sich insbesondere auch einteilig über die gesamte Fahrzeugbreite hinweg erstrekken und in der Fahrzeugmitte eine weitere Leuchtenanordnung HL4 mit z. B. zusätzliche Warnleuchten, Bremsleuchten und/oder Kennzeichenleuchten aufweisen.

Das vorzugsweise vorbereitet mit der Heckleuchtenanordnung HL1 verbundene Verbindungskabel VK ist bis zum Ende des Profils der Seitenmarkierungsleuchten geführt und dort über einen Anschlussverbinder PVA, welcher insbesondere an dem SML-Profil und/oder an dem Verbindungskabel über die Isolierung von Leitungsadern durchdringende Kontaktspitzen oder Kontaktschneiden kontaktiert ist, angeschlossen. Im Verlauf des Verbindungskabels ist über eine weitere Verbindungsanordnung PVB ohne Unterbrechung des Verbindungskabels VK eine Spurhalteleuchte SL angeschlossen, insbesondere wieder über eine Spitzenkontaktierung oder Schneidenkontaktierung in der Verbindungsanordnung PVB.

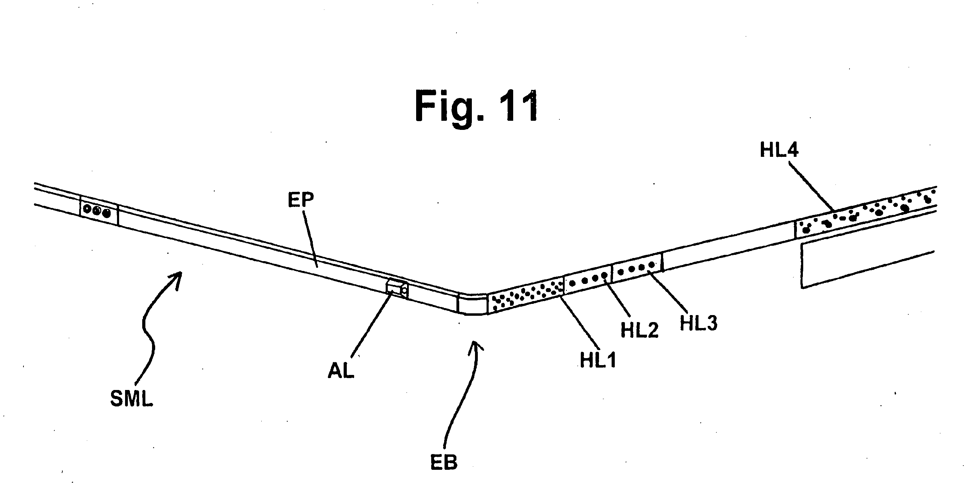

In Fig. 11 ist eine andere Ausführung einer vorteilhaften Fahrzeugleuchtenanordnung skizziert, bei welcher eine Seitenmarkierungsleuchtenanordnung SML der in Fig. 9 skizzierten Anordnung ununterbrochen einstückig um eine Fahrzeugecke in einem Bereich EB umgelenkt und als Heckleuchtenanordnung HL1, HL2, ... fortgeführt ist. Die Heckleuchtenanordnung kann vorteilhafterweise über die gesamte Breite des Fahrzeugs einstückig durchgehend ausgeführt und an beiden hinteren Fahrzeugecken einteilig mit den Seitenmarkierungsleuchtenanordnungen einen durchgehenden Leuchtenkörper bilden. Der Leuchtenkörper kann auch im vorderen Fahrzeugbereich bis zu einem typischerweise bei der Fahrzeugmittellängsebene angeordneten elektrischen Verteiler fortgeführt sein.

Bei der in Fig. 11 skizzierten Anordnung ist noch eine vorteilhafte Ausführung einer Spurhalteleuchte skizziert. Während die Seitenmarkierungsleuchten und die verschiedenen Heckleuchten typischerweise senkrecht zur Befestigungsfläche des Profils am Fahrzeug von dem Fahrzeug weg strahlen, sind Spurhalteleuchten mit unterschiedlichen Farben nach vorne und nach hinten als Hauptabstrahlrichtungen vorgesehen. Die Spurhalteleuchte in Fig. 11 ist vorteilhafterweise als Aufsatz AL auf das Profil ausgeführt. In dem Profil sind an der Position des Aufsatzes AL verdeckte elektronische Lichtquellen mit Hauptstrahlrichtung überwiegend senkrecht zur Befestigungsfläche bzw. zur Längsrichtung des Profils ausgerichtet in dem Leuchtenkörper umgossen vorgesehen. Der Aufsatz AL bildet ein passives optisches Modul, in welchem das von den im Profil EP eingebetteten Lichtquellen abgestrahlte Licht nach hinten bzw. nach vorne umgelenkt wird.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeugaußenleuchte mit wenigstens einer elektronischen Lichtquelle in einem Leuchtenkörper und mit einer Leitungsanordnung mit mehreren elektrischen Leitungen, wobei der Leuchtenkörper durch einen Vergusskörper aus einer isolierenden Vergussmasse gebildet ist, die Lichtquelle und die Leitungen von dem Vergusskörper im wesentlichen frei von Hohlräumen ummantelt sind und die Vergussmasse zumindest in einer Haupt-Abstrahlrichtung der Lichtquelle transparent ist, **dadurch gekennzeichnet, dass** wenigstens ein Teil der Außenfläche des Vergusskörpers durch eine Schutzschicht aus einem von der Vergussmasse verschiedenen Material bedeckt ist, wobei die Schutzschicht durch eine als Teil einer Gussform für den Vergusskörper benutzte und an dem Vergusskörper verbliebene Gehäuseschale gebildet ist.

2. Fahrzeugaußenleuchte nach Anspruch 1, **dadurch gekennzeichnet, dass** die Vergussmasse auch auf einer der Haupt-Abstrahlrichtung abgewandten Rückseite der Lichtquelle vorliegt.

3. Fahrzeugaußenleuchte nach Anspruch 1 oder 2, **dadurch gekennzeichnet, dass** die Vergussmasse mit Ausnahme von nach außen führenden Leitungsverbindungen allseitig die Lichtquelle und die Leitungsanordnung umschließt.

4. Fahrzeugaußenleuchte nach einem der Ansprüche 1 bis 3, **dadurch gekennzeichnet, dass**=die Vergussmasse im verfestigten Zustand dauerelastisch ist.

5. Fahrzeugaußenleuchte nach einem der Ansprüche 1 bis 4, **dadurch gekennzeichnet, dass** die Vergussmasse ein thermoplastisches Material ist.

6. Fahrzeugaußenleuchte nach einem der Ansprüche 1 bis 4, **dadurch gekennzeichnet, dass** die Vergussmasse ein anfänglich dünnflüssiges, verfestigbares Material ist.

7. Fahrzeugaußenleuchte nach einem der Ansprüche 1 bis 6, **dadurch gekennzeichnet, dass** wenigstens ein Teil der Leitungen in einem Leitungsträger mechanisch verbunden sind.

8. Fahrzeugaußenleuchte nach Anspruch 7, **dadurch gekennzeichnet, dass** der Leitungsträger zumindest abschnittsweise eine im wesentlichen starre Platine mit Leiterbahnen enthält.

9. Fahrzeugaußenleuchte nach Anspruch 7, **dadurch gekennzeichnet, dass** der Leitungsträger zumindest abschnittsweise flexibel ist.

10. Fahrzeugaußenleuchte nach einem der Ansprüche 7 bis 9, **dadurch gekennzeichnet, dass** der Leitungsträger ein flexibles Band mit mehreren Leitungen umfasst.

11. Fahrzeugaußenleuchte nach Anspruch 10, **dadurch gekennzeichnet, dass** eine im wesentlichen starre Platine mit Leiterbahnen die wenigstens eine Lichtquelle trägt und mit Leitungen des flexiblen Bandes kontaktiert ist.

12. Fahrzeugaußenleuchte nach Anspruch 10 oder 11, **dadurch gekennzeichnet, dass** entlang des Bandes mehrere Lichtquellen voneinander beabstandet angeordnet und getrennt mit Leitungen des flexiblen Bands kontaktiert sind.

13. Fahrzeugaußenleuchte nach Anspruch 12, **dadurch gekennzeichnet, dass** die mehreren Lichtquellen auf jeweils eigenen Platinen angeordnet sind.

14. Fahrzeugaußenleuchte nach einem der Ansprüche 1 bis 13, **dadurch gekennzeichnet, dass** innerhalb eines Gusskörpers mehrere unabhängig voneinander betreibbare Leuchten mit eigenen Lichtquellen angeordnet sind.

15. Fahrzeugaußenleuchte nach einem der Ansprüche 1 bis 14, **dadurch gekennzeichnet, dass** zumindest einige der Leitungen der Leitungsanordnungen durch den Vergusskörper zwischen einem Leitungseingang und einem Leitungsausgang hindurchführen.

16. Fahrzeugaußenleuchte nach Anspruch 15, **dadurch gekennzeichnet, dass** zumindest ein Teil der durch den Vergusskörper durchführenden Leitungen mit keiner Lichtquelle innerhalb des Vergusskörpers kontaktiert ist.

17. Fahrzeugaußenleuchte nach einem der Ansprüche 1 bis 16, **dadurch gekennzeichnet, dass** der Vergusskörper zumindest in Haupt-Lichtabstrahlrichtung durch eine formstabile transparente Gehäuseschale begrenzt ist.

18. Fahrzeugaußenleuchte nach einem der Ansprüche 1 bis 17, **dadurch gekennzeichnet, dass** die Außenfläche in einer quer zur Haupt-Lichtabstrahlrichtung verlaufenden Längsrichtung eine gleichbleibende Querschnittsform zeigt.

19. Fahrzeugaußenleuchte nach einem der Ansprüche 1 bis 18, **dadurch gekennzeichnet, dass** der Leuchtenkörper an wenigstens zwei gegenüberliegenden Seiten der Lichtaustrittsfläche in Haupt-Lichtaustrittsrichtung über die Lichtaustrittsfläche hinausragende Vorsprünge aufweist.

20. Fahrzeugaußenleuchte nach einem der Ansprüche 1 bis 19, **dadurch gekennzeichnet, dass** der Leuchtenkörper quer zur Haupt-Lichtabstrahlrichtung seitlich außenliegend Befestigungsstrukturen aufweist.

21. Fahrzeugaußenleuchte nach einem der Ansprüche 1 bis 20, **dadurch gekennzeichnet, dass** der Leuchtenkörper flexibel ist.

22. Fahrzeugaußenleuchte nach einem der Ansprüche 1 bis 21, **dadurch gekennzeichnet, dass** eine Reflektorvorrichtung in dem Vergusskörper eingeschlossen ist.

23. Fahrzeugaußenleuchte nach einem der Ansprüche 1 bis 22, **dadurch gekennzeichnet, dass** Befestigungselemente in dem Vergusskörper eingebettet sind.

24. Fahrzeugaußenleuchte nach einem der Ansprüche 1 bis 23, **dadurch gekennzeichnet, dass** wenigstens eine Lichtquelle als Leuchtdiode ausgeführt ist.

25. Verfahren zur Herstellung einer Fahrzeugleuchtenanordnung nach einem der Ansprüche 1 bis 24, wobei eine mit einer mehradrigen Leitungsanordnung kontaktierte Lichtquelle in eine Gussform eingelegt und die Gussform mit einem elektrisch isolierenden transparenten Vergussmaterial befüllt und das Vergussmaterial verfestigt wird, **dadurch gekennzeichnet, dass** eine an dem verfestigten Vergussmaterial verbleibende Gehäuseschale als ein Teil der Gussform benutzt wird.

26. Verfahren nach Anspruch 25, **dadurch gekennzeichnet, dass** zumindest ein Teil der Leitungsanordnung aus der Vergussform vor dem Vergießen nach außen geführt wird.

27. Verfahren nach einem der Ansprüche 25 bis 26, **dadurch gekennzeichnet, dass** das Vergussmaterial drucklos in die Gussform eingebracht wird.

28. Verfahren nach einem der Ansprüche 25 bis 26, **dadurch gekennzeichnet, dass** das Vergussmaterial unter erhöhtem Druck und erhöhter Temperatur in die Gussform eingebracht wird.

29. Verfahren zur Herstellung einer Fahrzeugleuchtenanordnung nach einem der Ansprüche 1 bis 24, **dadurch gekennzeichnet, dass** der Vergusskörper im Extrusionsverfahren hergestellt wird und die Lichtquelle mit der Leitungsanordnung in Extrusionsrichtung durch die Extrusionsdüse geführt und von dem extrudierten Vergussmaterial umflossen wird.

## Claims

1. Exterior vehicle luminaire with at least one electronic light source in a luminaire body and with a line arrangement with a plurality of electrical lines, the luminaire body being formed by a cast body made of an insulating casting compound, the light source and the lines being encapsulated by the cast body substantially free of cavities, and the casting compound being transparent at least in a main emission direction of the light source, **characterized in that** at least part of the outer surface of the cast body is covered by a protective layer made of a material which is different from the casting compound, the protective layer being formed by a housing shell, which is used as part of a casting mould for the cast body and remains on the cast body.

2. Exterior vehicle luminaire according to Claim 1, **characterized in that** the casting compound is also present on a rear side of the light source which is remote from the main emission direction.

3. Vehicle exterior luminaire according to Claim 1 or 2, **characterized in that** the casting compound surrounds the light source and the line arrangement on all sides with the exception of line connections which pass to the outside.

4. Exterior vehicle luminaire according to one of Claims 1 to 3, **characterized in that** the casting compound is permanently elastic in the solidified state.

5. Exterior vehicle luminaire according to one of Claims 1 to 4, **characterized in that** the casting compound is a thermoplastic material.

6. Exterior vehicle luminaire according to one of Claims 1 to 4, **characterized in that** the casting compound is an initially fluid, solidifiable material.

7. Exterior vehicle luminaire according to one of Claims 1 to 6, **characterized in that** at least some of the lines are mechanically connected in a line support.

8. Exterior vehicle luminaire according to Claim 7, **characterized in that** at least sections of the line support contain a substantially rigid board with conductor tracks.

9. Exterior vehicle luminaire according to Claim 7, **characterized in that** at least sections of the line support are flexible.

10. Exterior vehicle luminaire according to one of Claims 7 to 9, **characterized in that** the line support comprises a flexible strip with a plurality of lines.

11. Exterior vehicle luminaire according to Claim 10, **characterized in that** a substantially rigid board with conductor tracks bears the at least one light source and contact is made with it using lines of the flexible strip.

12. Exterior vehicle luminaire according to Claim 10 or 11, **characterized in that** a plurality of light sources are arranged spaced apart from one another along the strip and contact is made with them separately using lines of the flexible strip.

13. Exterior vehicle luminaire according to Claim 12, **characterized in that** the plurality of light sources are arranged on respectively dedicated boards.

14. Exterior vehicle luminaire according to one of Claims 1 to 13, **characterized in that** a plurality of luminaires which can be operated independently of one another and with dedicated light sources are arranged within a cast body.

15. Exterior vehicle luminaire according to one of Claims 1 to 14, **characterized in that** at least some of the lines of the line arrangements pass through the cast body between a line inlet and a line outlet.

16. Exterior vehicle luminaire according to Claim 15, **characterized in that** at least some of the lines passing through the cast body do not come into contact with any light source within the cast body.

17. Exterior vehicle luminaire according to one of Claims 1 to 16, **characterized in that** the cast body is delimited at least in the main light emission direction by a dimensionally stable, transparent housing shell.

18. Exterior vehicle luminaire according to one of Claims 1 to 17, **characterized in that** the outer surface demonstrates a uniform cross-sectional shape in a longitudinal direction running transversely with respect to the main light emission direction.

19. Exterior vehicle luminaire according to one of Claims 1 to 18, **characterized in that** the luminaire body has projections which protrude beyond the light exit face in the main light exit direction on at least two opposite sides of the light exit face.

20. Exterior vehicle luminaire according to one of Claims 1 to 19, **characterized in that** the luminaire body has fixing structures lying laterally on the outside and transversely with respect to the main light emission direction.

21. Exterior vehicle luminaire according to one of Claims 1 to 20, **characterized in that** the luminaire body is flexible.

22. Exterior vehicle luminaire according to one of Claims 1 to 21, **characterized in that** a reflector apparatus is enclosed in the cast body.

23. Exterior vehicle luminaire according to one of Claims 1 to 22, **characterized in that** fixing elements are embedded in the cast body.

24. Exterior vehicle luminaire according to one of Claims 1 to 23, **characterized in that** at least one light source is in the form of a light-emitting diode.

25. Method for manufacturing a vehicle luminaire arrangement according to one of Claims 1 to 24, a light source, with which contact is made using a multiple-core line arrangement, being inserted into a casting mould and the casting mould being filled with an electrically insulating, transparent casting material and the casting material being solidified, **characterized in that** a housing shell remaining on the solidified casting material is used as part of the casting mould.

26. Method according to Claim 25, **characterized in that** at least part of the line arrangement is passed to the outside out of the casting mould prior to the casting process.

27. Method according to one of Claims 25 to 26, **characterized in that** the casting material is introduced into the casting mould without any pressure being applied.

28. Method according to one of Claims 25 to 26, **characterized in that** the casting material is introduced into the casting mould under elevated pressure and elevated temperature.

29. Method for manufacturing a vehicle luminaire arrangement according to one of Claims 1 to 24, **characterized in that** the cast body is manufactured using the extrusion process and the light source is guided with the line arrangement in the extrusion direction through the extrusion die and extruded casting material is caused to flow around it.

## Revendications

1. Lampe extérieure de véhicule comportant au moins une source de lumière électronique dans un corps de lampe et un ensemble de lignes comprenant plusieurs lignes électriques, dans laquelle le corps de lampe est formé par un corps moulé en une masse de moulage isolante, la source de lumière et les lignes sont enveloppées par le corps moulé essentiellement sans cavités et la masse de moulage est transparente au moins dans une direction d'émission principale de la source de lumière, **caractérisée en ce qu'**au moins une partie de la surface extérieure du corps moulé est couverte d'une couche de protection en une matière différente de la masse de moulage, dans laquelle la couche de protection est formée par une coque de boîtier constituant une partie d'un moule utilisé pour le corps moulé et restant sur le corps moulé.

2. Lampe extérieure de véhicule selon la revendication 1, **caractérisée en ce que** la masse de moulage est également présente sur un côté arrière de la source de lumière, situé à l'opposé de la direction d'émission principale.

3. Lampe extérieure de véhicule selon la revendication 1 ou 2, **caractérisée en ce que** la masse de moulage enveloppe de tous les côtés la source de lumière et l'ensemble de lignes, à l'exception de raccordements de lignes conduisant vers l'extérieur.

4. Lampe extérieure de véhicule selon l'une quelconque des revendications 1 à 3, **caractérisée en ce que** la masse de moulage présente une élasticité permanente à l'état solidifié.

5. Lampe extérieure de véhicule selon l'une quelconque des revendications 1 à 4, **caractérisée en ce que** la masse de moulage est une matière thermoplastique.

6. Lampe extérieure de véhicule selon l'une quelconque des revendications 1 à 4, **caractérisée en ce que** la masse de moulage est une matière solidifiable, initialement très fluide.

7. Lampe extérieure de véhicule selon l'une quelconque des revendications 1 à 6, **caractérisée en ce qu'**au moins une partie des lignes sont réunies mécaniquement dans un support de lignes.

8. Lampe extérieure de véhicule selon la revendication 7, **caractérisée en ce que** le support de lignes comprend au moins localement une platine essentiellement rigide avec des voies conductrices.

9. Lampe extérieure de véhicule selon la revendication 7, **caractérisée en ce que** le support de lignes est flexible au moins localement.

10. Lampe extérieure de véhicule selon l'une quelconque des revendications 7 à 9, **caractérisée en ce que** le support de lignes comprend une bande flexible comportant plusieurs lignes.

11. Lampe extérieure de véhicule selon la revendication 10, **caractérisée en ce qu'**une platine essentiellement rigide avec des voies conductrices porte l'au moins une source de lumière et est raccordée à des lignes de la bande flexible.

12. Lampe extérieure de véhicule selon la revendication 10 ou 11, **caractérisée en ce que** plusieurs sources de lumière sont disposées à distance l'une de l'autre le long de la bande et sont raccordées séparément à des lignes de la bande flexible.

13. Lampe extérieure de véhicule selon la revendication 12, **caractérisée en ce que** les multiples sources de lumière sont disposées chaque fois sur des platines individuelles.

14. Lampe extérieure de véhicule selon l'une quelconque des revendications 1 à 13, **caractérisée en ce que** plusieurs lampes avec leurs propres sources de lumière, utilisables indépendamment l'une de l'autre, sont disposées à l'intérieur d'un corps moulé.

15. Lampe extérieure de véhicule selon l'une quelconque des revendications 1 à 14, **caractérisée en ce qu'**au moins quelques-unes des lignes des ensembles de lignes traversent le corps moulé entre une entrée de lignes et une sortie de lignes.

16. Lampe extérieure de véhicule selon la revendication 15, **caractérisée en ce qu'**au moins une partie des lignes traversant le corps moulé ne sont raccordées à aucune source de lumière à l'intérieur du corps moulé.

17. Lampe extérieure de véhicule selon l'une quelconque des revendications 1 à 16, **caractérisée en ce que** le corps moulé est limité par une coque de boîtier transparente de forme stable au moins dans la direction d'émission principale.

18. Lampe extérieure de véhicule selon l'une quelconque des revendications 1 à 17, **caractérisée en ce que** la surface extérieure présente une section transversale de forme constante dans une direction longitudinale s'étendant transversalement à la direction d'émission principale.

19. Lampe extérieure de véhicule selon l'une quelconque des revendications 1 à 18, **caractérisée en ce que** le corps de lampe présente, sur au moins deux côtés opposés de la surface de sortie de la lumière, des saillies sortant de la surface de sortie de la lumière dans la direction d'émission principale.

20. Lampe extérieure de véhicule selon l'une quelconque des revendications 1 à 19, **caractérisée en ce que** le corps de lampe comprend des structures de fixation placées latéralement vers l'extérieur, transversalement à la direction d'émission principale.

21. Lampe extérieure de véhicule selon l'une quelconque des revendications 1 à 20, **caractérisée en ce que** le corps de lampe est flexible.

22. Lampe extérieure de véhicule selon l'une quelconque des revendications 1 à 21, **caractérisée en ce qu'**un dispositif de réflecteur est incorporé dans le corps moulé.

23. Lampe extérieure de véhicule selon l'une quelconque des revendications 1 à 22, **caractérisée en ce que** les éléments de fixation sont noyés dans le corps moulé.

24. Lampe extérieure de véhicule selon l'une quelconque des revendications 1 à 23, **caractérisée en ce qu'**au moins une source de lumière est une diode électroluminescente.

25. Procédé de fabrication d'un dispositif de lampe de véhicule selon l'une quelconque des revendications 1 à 24, dans lequel on dépose dans un moule une source de lumière raccordée à un ensemble de lignes à plusieurs brins, on remplit le moule avec une matière de moulage transparente électriquement isolante et on solidifie la matière de moulage, **caractérisé en ce que** l'on utilise pour une partie du moule une coque de boîtier restant sur la matière de moulage solidifiée.

26. Procédé selon la revendication 25, **caractérisé en ce** l'on conduit au moins une partie de l'ensemble de lignes vers l'extérieur hors du moule avant le moulage.

27. Procédé selon l'une quelconque des revendications 25 à 26, **caractérisé en ce que** l'on introduit la matière de moulage sans pression dans le moule.

28. Procédé selon l'une quelconque des revendications 25 à 26, **caractérisé en ce que** l'on introduit la matière de moulage dans le moule sous une pression accrue et une température accrue.

29. Procédé de fabrication d'un dispositif de lampe de véhicule selon l'une quelconque des revendications 1 à 24, **caractérisé en ce que** l'on produit le corps moulé par un procédé d'extrusion, on guide la source de lumière avec l'ensemble de lignes dans la direction d'extrusion à travers la filière d'extrusion et on l'enrobe avec la matière de moulage extrudée.
